# EUROPÄISCHE PATENTSCHRIFT

(11) **EP 1 568 541 B1**
(45) Veröffentlichungstag und Bekanntmachung des Hinweises auf die Patenterteilung: **15.10.2008**
(21) Anmeldenummer: 04027501.8
(22) Anmeldetag: 19.11.2004
(51) Int. Cl.: B60P 7/15, B61D 45/00, A47B 96/14

(54) **Einspannvorrichtung**
Bracing means
Dispositif de fixation

(30) Priorität: 20.02.2004 DE 102004008832
(43) Veröffentlichungstag der Anmeldung: 31.08.2005
(73) Patentinhaber: Richter, Alexander, 86508 Rehling (DE)
(72) Erfinder: Richter, Alexander, 86508 Rehling (DE)
(74) Vertreter: Abel, Martin

(56) Entgegenhaltungen:
- EP-A- 0 784 951
- WO-A-98/07351
- DE-U1- 20 213 048
- DE-U1- 29 500 415
- US-A- 5 318 175

## Beschreibung

Die Erfindung bezieht sich auf eine Einspannvorrichtung wie sie zum Beispiel zur Sicherung von Ladegut in Laderäumen von Fahrzeugen aller Art Verwendung findet oder auch ganz allgemein als flexibles Organisationssystem in geschlossenen Räumen, nach dem Oberbegriff des Patentanspruches 1.

Bei einer in der DE 20213048 U beschriebenen Einspanneinrichtung erfolgt die Verspannung der zwischen zwei Stützgliedern befindlichen Sperrstange über eine Spann-Einrichtung, vorzugsweise über eine Doppel-Gewindespindel, die im Verlauf der Sperrstange vorgesehen ist. Die Sperrstange ist somit aus zwei Stangenteilen zusammengesetzt, mit zwei Gewindebuchsen an den einander zugekehrten Stangenteilenden und einer in diesen Buchsen laufenden Gewindespindel. Abgesehen davon, dass beim Handhaben dieser Sperrstange, insbesondere beim Spannen und Lösen an der vorzugsweise nahe am unteren Stützglied befindlichen Spann-Einrichtung, also praktisch am Boden kniend zu arbeiten ist, ist auch ein modularer Aufbau durch diese fest zwischengesetzte Spann-Einrichtung nicht optimal realisierbar. Zudem kann die Ladungssicherung nur durch die Sperrstangen selbst vorgenommen werden, z. B. durch seitliches Anlehnen an oder durch vertikales Verspannen des Ladegutes über die Sperrstangen. Eine flächigere Abstützung in Art eines Reffs ist im weitesten Sinne höchstens durch eine fächerartige Anordnung mehrerer Sperrstangen möglich. Zudem können diverse Utensilien, Werkzeuge und kleinere Ladungsteile, wie sie in Liefer-Servicefahrzeugen mitgeführt werden, hierdurch nicht sicher bzw. nicht ausreichend gesichert aufbewahrt oder mitgeführt werden.

Aus der DE 29500415 U ist eine Einspannvorrichtung der eingangs genannten Art bekannt, die Bestandteil eines Bausatzes für Kleinmöbel ist. Sie beinhaltet unter anderem eine aus mehreren Rohrstücken zusammengesetzt Tragstange mit endseitigen Stützgliedern. Eines der Stützglieder umfasst ein Kopfstück, das an einem Kugelgelenk gelagert ist. Das Kugelgelenk enthält eine Gelenkkugel mit anschließendem Gewindebolzen, der in ein mit einem Innengewinde versehenes Verbindungsstück einschraubbar ist, das in eine Teleskopstange eingepresst ist.

Aufgabe der Erfindung ist es, eine Einspannvorrichtung anzugeben, die ein schnelles und handliches Einspannen erlaubt, einen optimalen Modul- bzw. Baukastenaufbau ermöglicht und eine vielseitige Verwendbarkeit als Basis eines flexiblen Organisations- und Befestigungssystems erlaubt.

Diese Aufgabe wird durch eine Einspannvorrichtung mit den Merkmalen des Patentanspruches 1 gelöst. Vorteilhafte Ausgestaltungen sind in den Unteransprüchen gekennzeichnet.

Demgemäß ist als Trieb- und Spanneinrichtung eine Kugelwindeneinheit vorgesehen, bestehend aus einer Gewindebuchse, die am oberen Ende der Sperrstange einsteckbar ist und aus einer Gewindespindel, die gleichzeitig der Befestigungszapfen des Lagerkopfes des Kugelkopflagers des vorzugsweise oberen Stützgliedes ist. Dadurch befindet sich die Spanneinrichtung - zumindest bei Kombi-, Van- und anderen Liefer- und Servicefahrzeugen - praktisch in Augenhöhe an der Spannstange angeordnet, so dass sie leichter betätigt und auch sicherer beobachtet werden kann, wenn die Gewindespindel eventuell zu stark aus der Gewindebuchse heraus gedreht wird, was unbedingt zu vermeiden ist. Zweckmäßigerweise besitzt die Gewindespindel hierfür auf Abstand von ihrem Ende von 1,5 ihres Durchmessers einen farblich ausgelegten Signalring, der bei ordnungsgemäßer Verspannung nicht sichtbar aus der Gewindebuchse austreten darf. Zudem ist auch diese Ausführung einfach, da nur eine Gewindebuchse vorhanden ist und für die Gewindespindel lediglich der Steckzapfen des Lagerkopfes mit einem Gewinde zu versehen ist. Ein zweckmäßigerweise zwischen Kugelkopf und Gewindezapfen vorhandene Anschlagring ist bevorzugt etwas dicker ausgelegt, so dass er als Greifring zumindest zum leichten Vorspannen von Hand dienen kann, also ohne Zuhilfenahme eines Werkzeugs, wobei seine Mantelfläche mit Rillen oder Riefen versehen sein kann und dadurch eine wesentliche Arbeitserleichterung darstellt. Zum festen Verspannen ist vorzugsweise durch diesen Greifring eine radial hindurch geführte Bohrung vorgesehen, um mit Hilfe eines Kraftverstärkungsstabes ein größeres Drehmoment auf die Spindel aufbringen zu können. Selbstverständlich ist nach erfolgter fester Verspannung die Gewindeverbindung zweckmäßigerweise mit einer Kontermutter abzusichern. Es besteht jedoch die Möglichkeit, mit nur einem Werkzeug sowohl über den Greifring der Spindel die Verspannung vorzunehmen als auch die Absicherung durch die Kontermutter durchzuführen.

Dadurch dass sich die Spanneinrichtung nicht im Verlauf der Spannstange befindet, kann in vorteilhafter Weise die Sperrstange aus mehreren axial zusammensteckbaren Rohrteilen zusammengesetzt sein, in Form von Rohr-Distanzstücken, die untereinander über Doppelsteckteile (Kupplungen) zusammensteckbar sind. Zudem ist zweckmäßigerweise ein in die mindestens eine Steckbohrung des unteren Stützgliedes einsteckbares gerades Steckteil oder Schräg-Steckteil vorgesehen zum einfachen, schnellen auf- oder einsteckbaren Befestigen bzw. Koppeln des unteren Endes der Sperrstange am unteren Stützglied. Beim Zusammensetzen und Anordnen des Spannstempels müssen somit lediglich entsprechend der zu überbrückenden Höhe Rohr-Distanzstücke entsprechender Länge und Anzahl über Doppelsteckteile zu einer Sperrstange zusammengefügt werden, wobei vorzugsweise eines der Distanzstücke bereits mit einer Gewindebuchse versehen sein kann, wonach in diese der Gewindezapfen des oberen Stützgliedes, das ein Kugelkopflager besitzt, einzuschrauben ist. Es kann aber bereits die Gewindebuchse auf dem Gewindezapfen aufgeschraubt und so direkt in das freie Ende des oberen Distanzstückes eingesteckt werden. Danach ist in das untere Stützglied das entsprechende Steckteil einzustecken und auf oder in dieses das untere Ende der Sperrstange zu stecken, je nachdem, ob eine gerade oder geneigte Anordnung des Stempels erfolgen soll. Nach entsprechender Ausrichtung des Stempels wird dann von Hand die Gewindespindel betätigt und der Stempel zumindest leicht vorgespannt. Sodann wird nach Überprüfung der Anordnung und eventueller Anordnung an den Stempeln weiterer System- oder Modulteile, mit Hilfe eines Werkzeuges fertig gespannt.

Zur Erweiterung der Anwendungsmöglichkeiten der Einspannvorrichtung enthält diese mindestens einen an der Sperrstange festklemmbaren Multifunktionsadapter, der seinerseits zur Befestigung weiterer Halte- und Trageeinrichtungen dient. Der Multifunktionsadapter weist die Form eines Spannringes auf, an dem mittels zwei Befestigungsschrauben eine senkrecht zur Sperrstange verlaufende Traverse, in Form eines Vierkantrohres oder einer zum Beispiel als Kleiderstange, z. B. in Form eines Rundrohres, ausgebildeten runden Haltestange festschraubbar ist. Dabei weist die Traverse in Längsrichtung über ihre gesamte Länge mittig gleichmäßig beabstandete Durchgangsbohrungen auf, wobei der Abstand der Befestigungsschrauben des Adapters gleich dem Lochabstand an der Traverse ist. So kann eine Traverse auf ihrer ganzen Länge bedarfsweise mit einem Multifunktionsadapter schnell gekoppelt werden. Es müssen lediglich die beiden aus dem Multifunktionsadapter herausragenden, insbesondere als schwenkbare Ring- bzw. Augenschrauben ausgebildeten Befestigungsschrauben durch zwei nebeneinander befindliche Traversenlöcher hindurchgesteckt und auf der anderen Traversenseite, z. B. durch eine Schnellspannmutter, festgesetzt werden.

An der Traverse können nun diverse weitere Einrichtungen direkt aufgesteckt oder angeschraubt werden. So können an zwei vertikal übereinander an einer Sperrstange angeordneten Traversen jeweils in Vertikalausrichtung übereinander je ein Multifunktionsadapter befestigt werden und in diesen beiden Adaptern ein Rohr-Distanzstück entsprechender Länge festgeklemmt werden. An dieser zusätzlichen vertikalen Befestigungsstange können dann weitere Einrichtungen, z. B. über einen Multifunktionsadapter befestigt werden, so z. B. eine kurze Traverse und daran weitere Befestigungs- oder Halteeinrichtungen, die nachfolgend noch näher beschrieben werden.

Durch die Stempel mit daran quer befestigten Traversen wird ein Reff zur Verfügung gestellt, das die Funktion eines Schutzgitters hat und zur flächigen Absicherung einer an diese angelehnten Ladung dient.

Es können zudem an den Traversen befestigbare Dreieckträger vorgesehen sein, die aus einer Platte in Form eines rechtwinkligen Dreiecks bestehen, wobei vorzugsweise ein Dreieck mit spitzem Winkel von ca. 30° vorzuziehen ist. Die Befestigung dieses Dreieckträgers erfolgt über die kurze Kathete, so das die lange Kathete horizontal hervorragt. Je nachdem nun mit welcher Seite nach oben bzw. nach unten weisend der Dreieckträger an der Traverse befestigt ist, steht eine obere, horizontale oder eine mit 30° oder anderem Winkel zur Horizontalen geneigte Auflagefläche des Trägers zur Verfügung. Eine schnelle und sichere Befestigung an der Traverse wird zudem dadurch erreicht, dass ein zur kleinen Kathete paralleler Aufsteckschlitz an dem Dreieckträger vorgesehen ist, der zur großen Kathete hin offen ist. Der Dreieckträger kann nun über seinen Aufsteckschlitz von oben oder von unten auf die Traverse gesteckt und mit einer durch die Traverse hindurchführenden Schraube befestigt werden. Wird nun der Dreieckträger von unten an die Traverse aufgesteckt, dann steht eine horizontale Auflagefläche zur Verfügung, während in von oben aufgesteckten Zustand eine schräge Auflagefläche vorhanden ist.

Als Auflageelemente, die an der jeweiligen horizontalen oder schrägen Auflageseite der Dreieckträger aufliegend zu befestigen sind, können unterschiedliche Elemente verwendet werden, wie Lochbleche, Platten, Lochblechwannen, Werkbänke, Spannzwingen, so dass insgesamt ein Regal mit Fächern und vielen Einstell- und Verwendungsoptionen entsteht. Ein solches Regal kann mit ein, zwei oder mehreren Spannstempeln eingespannt sein, wobei z. B. zur Ladungssicherung in einem Van die Entfernung zwischen den Spannstempeln unabhängig von der Belastung nicht mehr als 1,3 Meter betragen sollte. Die auf den Dreieckträgern aufliegenden Lochblechprofile sind dabei über je zwei Schrauben in den Trägern zu befestigen. Je nach Tiefe und Ladehöhe der so gebildeten Fächer sind Teilungen bzw. Trenn- oder Abschlusswände vorgesehen, die das Ladegut insbesondere in Längsrichtung der Fächer sichern. Diese werden vertikal auf die Fachböden eingelegt und von unten und seitlich festgeschraubt. Fachboden- Abschlusswände können nach oben und nach unten abstehend befestigt werden, wobei dann je eine obere und eine untere Abschlusswand fluchtend zueinander und miteinander durch die Lochung des Fachbodens verschraubbar sind. Insbesondere die unteren Abschlusswände können über darin vorgesehene Löcher dazu dienen, Sicherungsbänder daran zu befestigen und unter dem Fachboden befindliche, z. B. auf den Boden aufgestellte Ladung zu sichern.

Ein Regal kann aber auch nur mit einem Spannstempel eingespannt werden. Um dieses Regal gegen Verdrehen zu sichern, sind paarweise montierte Torsionsadapter vorgesehen. Diese sind horizontal und außerhalb der Regalmitte angebaut und an einem Holm der Karosserie ausgerichtet. Für diese Abstützung der Drehkraft sind verschiedene Lösungen des Systems möglich, wobei z. B. drei Typen von Torsionsadaptern je nach Anforderung in Position gebracht und anpassbar sind. So ist ein Torsionsadapter vorgesehen, der an der Unterseite des als Fachboden verwendeten Lochbleches, z. B. an einer Lochblechwanne, über einen kleinen klotzförmigen Adapterkörper anschraubbar ist. Eine Gewindespindel durchsetzt diesen Adapterkörper in Längsrichtung, ist mit einer Kontermutter gesichert und weist an ihrem äußeren Ende ein allseitig beweglichen Kugelkopf-Druckstück auf. Um diesem Torsionsadapter eine optimale Ausrichtung im Verhältnis zur Abstützfläche geben zu können, also zum Beispiel parallel, senkrecht oder in einem 45°-Winkel zum Verlauf des Lochblech-Fachbodens, sind im Adapterklotz drei Gewindebohrungen in besonderer Weise angeordnet und zwar so, dass immer zwei der Bohrungen zum Einsatz kommen unabhängig davon, welche der drei vorgenannten Positionen eingenommen werden.

In Längsrichtung des Klotzes sind dabei zwei Lochreihen vorgesehen, mit einem Lochreihenabstand gleich dem Lochabstand des Fachbodens, wobei in einer Lochreihe zwei Bohrungen vorgesehen sind, die den 45°-Abstand zwischen zwei diagonal versetzten Löchern der Lochreihen besitzen, während die Bohrung der zweiten Lochreihe zur entfernteren Bohrung der ersten Reihe einen doppelten Lochabstand besitzt.

In anderer Ausführungsform ist am Torsionsadapter ein Traversenreiter angebracht, der gleichzeitig als Adapterkörper dienen kann. Der Traversenreiter ist eine Platte mit einem Steckschlitz mit den Quermaßen der Traverse und kann auf diese von oben oder von unten aufgesteckt und über durch die Traversenlochungen entsprechend durchgeführte Schrauben befestigt werden. Die Gewindespindel des Adapters ist in einer quer zum Verlauf des Schlitzes durch den Körper des Traversenreiters angeordneten Gewindebohrung gehalten. An diesem Traversenreiter können jedoch auch andere Systemelemente angeschraubt werden, so dass er auch direkt zur Ladungssicherung verwendbar ist.

Der Torsionsadapter kann aber auch in einer entsprechenden Gewindebohrung einer Traversenverlängerung vorgesehen sein. Diese Traversenverlängerung hat die Form eines teleskopisch am Traversenende axial ein- und ausschiebbaren Profilstückes, das mit einer identischen Lochreihe ausgestattet ist wie die Traverse.

Schließlich können die Rohre, Traversen und weitere Systemelemente mit sogenannten Schlauchpolsterungen versehen sein. Dabei kann ein Schlauch aus weichem Material über diese Teile gezogen sein, zur Schonung des Einspanngutes.

Das vorbeschriebene Einspann- und Organisationssystem ist somit äußerst flexibel und kann optimal in anderen Behältnissen oder Räumlichkeiten sehr vorteilhaft Verwendung finden.

So kann das Einspannsystem in Lager- und Büroräumen eingesetzt werden, insbesondere als flexibles Regalsystem mit vielen Einstelloptionen, zum direkten Einstellen von Werkzeugen oder Ordnern oder von Aufbewahrungskästen oder -Schachteln und z. B. bei geneigten Fächern zum optimalen einsehbaren Auslegen von Prospektmaterial (Display-Regal). Dies ist besonders vorteilhaft, da z. B. die Spannstangen ganz nahe an einer Wand anordenbar sind, während die Fachböden dann von diesen einseitig in den Raum frei abstehen.

Auch in Krankenhäusern und Rheakliniken ist das lösungsgemäße System optimal einsetzbar. So kann z. B eine Sperrstange neben einem Bett fixiert und an dieser horizontal verschwenkbar verschiedene Hilfsmittel angeordnet werden, wie z. B. ein Bügel als Aufstehhilfe, eine Arbeitsplatte oder ein Pult. Es können aber auch z. B. zu beiden Seiten eines Bettes je eine oder mehrere Stangen angeordnet werden und zwischen diesen über Traversen oder Stangen diverse Hilfsmittel zur Verfügung gestellt werden.

Aber auch zur Befestigung von Möbelteilen ist die Einspannvorrichtung im System vielseitig einsetztbar. So können Raumteiler in Form von Regalen zusammengesetzt werden oder ganze Küchenteile mitten in einem Raum sicher fixiert werden. Dies ist insbesondere für Einrichtungen, die oft umgestellt werden müssen oder für Personen, die oft Umziehen oder ihr Betätigungsfeld wechseln müssen, von besonderem Vorteil, da sie die Einrichtungen schnell und sicher aufstellen können, ohne Verankerungen an den Wänden oder Raumdecken oder Böden vorsehen zu müssen und diese anschließend wieder entfernen zu müssen. Sie können nun ihr Möbelsystem schnell und flexibel aufbauen und wieder abbauen.

Nachfolgend wird die Erfindung an Hand mehrerer beispielhafter Ausführungsformen unter bezug auf die Zeichnung näher erläutert. Es zeigen:
- Fig. 1:: eine Vorderansicht auf eine Einspannvorrichtung mit einer Spannstange und zwei Fachböden;
- Fig. 2:: eine Seitenansicht mit teilweisen Schnitten auf die Vorrichtung nach Figur 1;
- Fig. 3:: eine Vorderansicht einer Einspanneinrichtung mit zwei Spannstangen, drei Fachböden und einer Schwenkplatte;
- Fig. 4:: eine Seitenansicht der Vorrichtung nach Fig. 3;
- Fig. 5:: eine Draufsicht der Vorrichtung nach Fig. 3 und 4;
- Fig. 6:: eine Draufsicht mit teilweisem Schnitt der Vorrichtung nach Fig.1 und 2;
- Fig. 7:: eine schematische Seitenansicht auf einen an einer Sperrstange befestigten Multifunktionsadapter mit daran befestigter Traverse;
- Fig. 8:: eine Draufsicht auf die Anordnung nach Fig. 7;
- Fig. 9:: eine Detailansicht in teilweisem Schnitt, die Anordnung eines Traversenreiters, der einen Torsionsadapter trägt, veranschaulichend;
- Fig. 10:: eine Seitenansicht des Traversenreiters nach Fig. 9;
- Fig. 11:: eine Seitenansicht in teilweisem Schnitt eines an einem Regalboden befestigten Torsionsadapters;
- Fig. 12:: eine Ansicht auf die Befestigungsseite des Körpers des in Fig. 11 dargestellten Torsionsadapters;
- Fig. 13:: eine schematische teilweise Perspektivansicht einer Lochblechwanne;
- Fig. 14:: eine Draufsicht auf die Längsseite eines Lochbleches ähnlich wie in Fig. 13, mit Torsionsadaptern in drei unterschiedlichen Anordnungsstellungen;
- Fig. 15:: eine perspektivische Ansicht von unten einer an einer Spannstange gehaltene Lochblechwanne und daran befestigten Torsionsadaptern;
- Fig. 16:: in schematischer Anordnung übereinander an einer Sperrstange mehrere Regalfachanordnungen und - ausführungen;
- Fig. 17:: eine vordere Teilansicht eines Einspannregals mit zwei Traversen, und dazwischen befindlichen kurzen Distanzstücken mit verschwenkbarer Arbeitsplatte; und
- Fig. 18:: in einfacher neben- und übereinander befindlicher Darstellung die wichtigsten Elemente der zu einem System zusammenfassbaren Elemente der Vorrichtung.

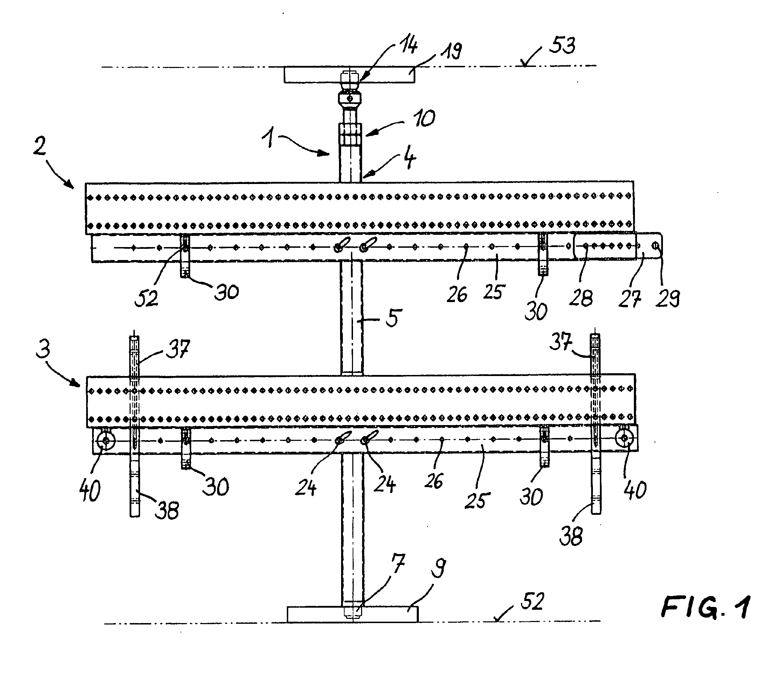

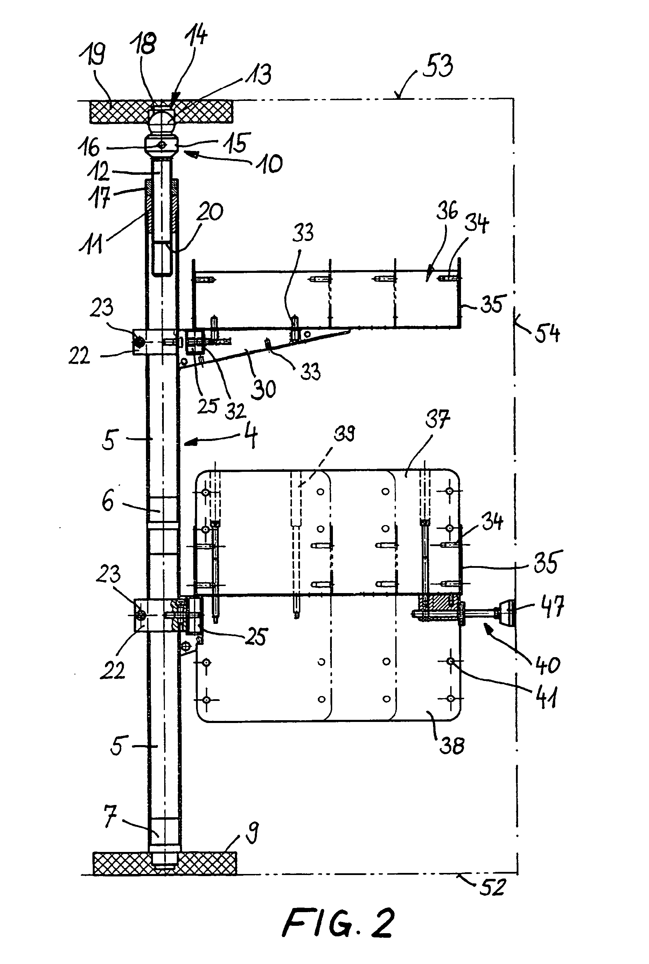

Das in Fig. 1 und 2 dargestellte Einspann-Organisationssystem besitzt einen Spannstempel 1, an dem in vertikaler Beabstandung zueinander zwei Regalböden 2 und 3 angebracht sind. Der Spannstempel 1 besteht aus einer Sperrstange 4, die insbesondere aus Fig. 2 ersichtlich ist und ist aus zwei Distanzstücken 5 über ein Steck-Kupplungsteil 6 axial zusammengefügt. An ihrem unteren Ende ist die Stange 4 über ein Steckteil 7 an einem unteren Stützglied 9 (Bodenadapter) steckbefestigt. An ihrem oberen Ende ist als Trieb- und Spanneinrichtung 10 eine Gewindebuchse 11 eingesteckt, in die der Gewindezapfen einer Lagerkugel 13 eines Kugelkopflagers 14 eingeschraubt ist. Zwischen Lagerkugel 13 und Gewindezapfen 12 ist ein Anschlag- und Greifring 15 vorgesehen, in dem eine Durchgangsbohrung 16 zum Einstecken eines stabförmigen Werkzeugs als Drehmomentverstärker, vorgesehen ist. Zudem ist auf dem Gewindezapfen 12 eine Kontermutter 17 angeordnet. Dabei stützt sich die Lagerkugel 13 in einer Lagerpfanne 18 in einem oberen Stützglied 19 (Deckenadapter) ab. Die Kugelwinde, gebildet aus Lagerkugel 13, Greifring 15 und Gewindezapfen 12, ist mit dem oberen Stützglied 19 zweckmäßigerweise zu einer Einheit verbunden, also mit diesem als eine Modul-Einheit handhabbar. Nahe dem unteren Ende des Gewindezapfens 12 ist ein farblich ausgelegter Markierungsring 20 vorgesehen, vorzugsweise auf einem Abstand von mindestens 1,5 des Durchmessers. Dieser Ring dient der Anzeige, dass die Gewindespindel 12 nicht weiter herausgedreht werden darf, wenn am oberen Rand der Gewindebuchse 11 dieser Ring sichtbar wird.

Die Stützfläche der beiden Stützglieder 9, 19 beträgt zweckmä-ßigerweise jeweils mindestens das Dreifache im Durchmesser oder in der Längen- und Breitenabmessung vom Durchmesser der Sperrstange 4.

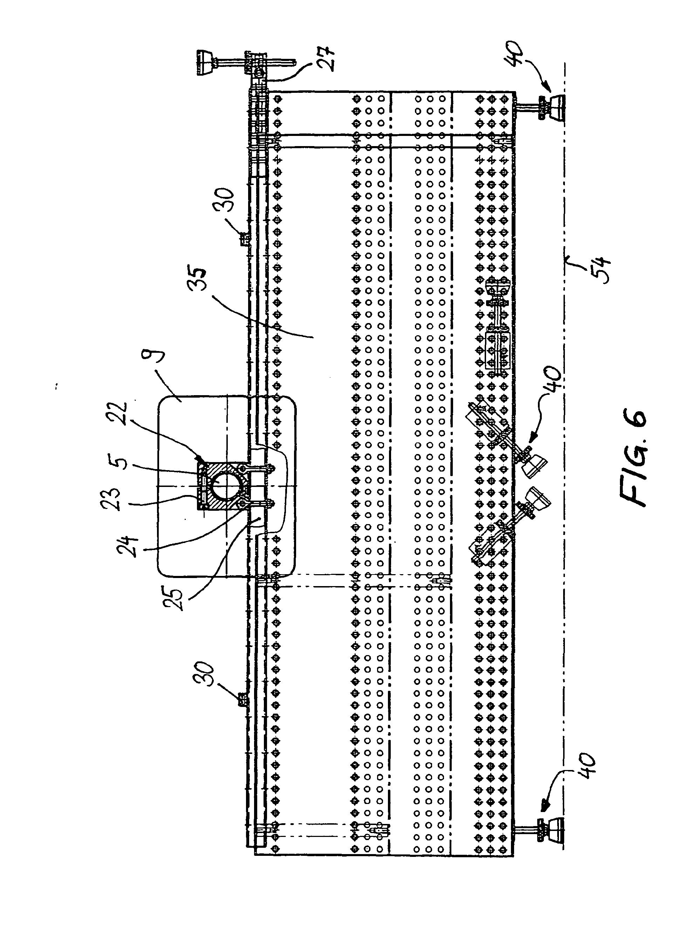

An den Distanzstücken 5 der Stange 4 sind zwei Multifunktionsadapter über Schrauben 23 klemmbefestigt, deren Aufbau im Zusammenhang mit Fig. 6, 7 und 8 näher beschrieben wird. Am Multifunktionsadapter 22 ist eine Traverse 25 über Augenschrauben 24 angeschraubt, wobei zu erkennen ist, dass die Traverse 25 auf ihrer ganzen Länge eine mittige Reihe gleichmäßig zueinander beabstandete Befestigungslöcher 26 besitzt. An der in Fig. 1 rechten Seite der oberen Traverse befindet sich teleskopisch eine in Längsrichtung ein- und ausschiebbare Traversenverlängerung 27 mit einer Längsreihe von Löchern 28, die in ihrer Beabstandung mit denjenigen der Traversenlöcher 26 übereinstimmt, nur dass sie etwas dichter aufeinanderfolgen, um eine feinere Längsabstimmung zu ermöglichen. Am herausstehenden Ende der Traversen-Verlängerung 27 ist eine Bohrung 29 vorgesehen, z. B. als Gewindebohrung, um bedarfsweise weitere Elemente befestigen zu können. An den Traversen 25 sind jeweils zwei Dreieckträger 30 von unten über einen Steckschlitz 31 formangepasst aufgeschoben und durch eine durch die Traversen-Befestigungslöcher 26 hindurchreichende Schraube 32 festgehalten. Auf den horizontal weisenden oberen Schenkel der jeweils zwei Dreieckträger 30 ist ein Regalboden 35 aufgelegt und über Schrauben 33 befestigt. Im Inneren der Lochblechwanne sind vertikale Trenn- oder Abschlusswände 36 über Schrauben 33 und 34 festgehalten.

An dem unteren Regalboden 35 sind besonders hohe Trenn- bzw. Abschlusswände 37 vorgesehen und zwar befinden sich nach oben abragend Trennwände 37 und nach unten ragend Wände 38. Es ist zu erkennen, dass die beiden großen Trenn- oder Abschlusswände 37, 38 vertikal fluchtend übereinander angeordnet sind und durch lange, durch die obere Wand 37 und den Regalboden hindurchgeführte Schrauben 39 festgehalten werden, wodurch auch gleichzeitig eine besondere Steifigkeit erzielt wird. An den Wänden 37 und 38 sind diverse Löcher 41 vorgesehen, die zur Befestigung verschiedener Halteelemente, z. B. von Kordeln und Haken, dienen können.

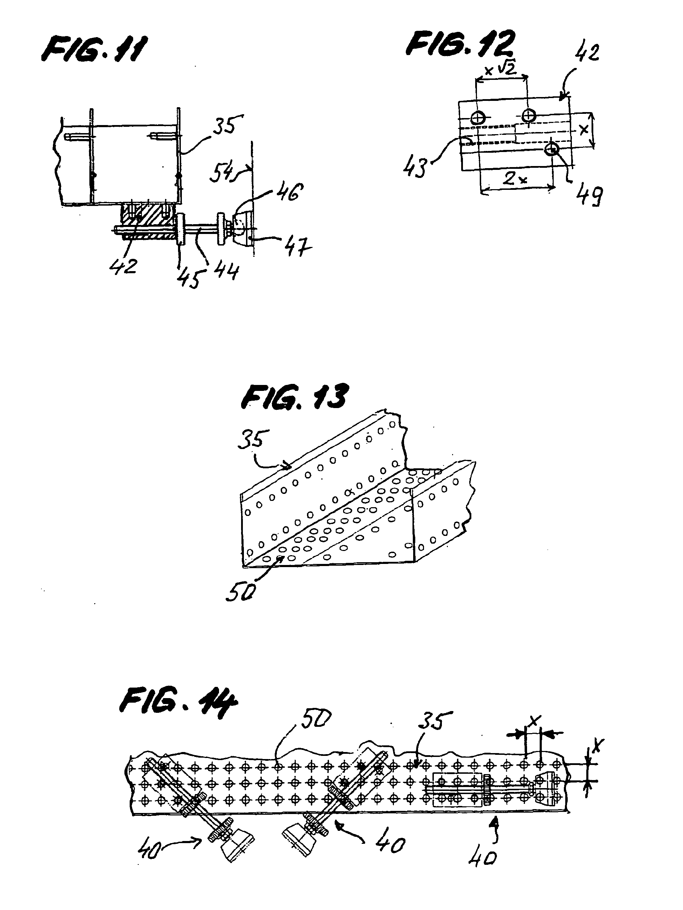

An dem unteren der beiden Regalböden 35 ist ein Torsionsadapter 40 horizontal herausragend befestigt, der hier gleichzeitig in Zusammenschau mit Fig. 11 und 12 beschrieben wird.

Es ist zu erkennen, dass der Torsionsadapter 40 einen klotzförmigen Adapterkörper 42 besitzt. In Längserstreckung des Körpers 42 ist eine Gewindebohrung 43 vorgesehen, in der eine über eine Kontermutter 45 abgesicherte Gewindespindel 44 geführt ist und somit in einstellbarer Länge aus dieser herausragt. An diesem herausragenden Ende ist über einen Kugelkopf 46 ein Druckstück 47 allseitig kippbar angebracht. Auch hier ist, ähnlich wie bei der Kugelwinden-Spanneinrichtung 10 des Spannstempels 1, ein Greifring 48 zur leichteren Einstellbarkeit vorgesehen. Im Adapterkörper 42 sind drei Gewindebohrungen 49 in besonderer Beabstandung zueinander angeordnet, wie bereits eingangs vorerwähnt. Die besondere Anordnung dient zur Befestigung in unterschiedlichen Ausrichtungen an den Lochblechen der Regalböden, wobei aus Fig. 12 und 14 zu entnehmen ist, dass (Fig. 12) die beiden oberen Bohrungen zur Befestigung in 45°-Stellung dienen, während die Bohrung links oben und rechts unten zur Befestigung in Längs- oder Querrichtung verwendet werden.

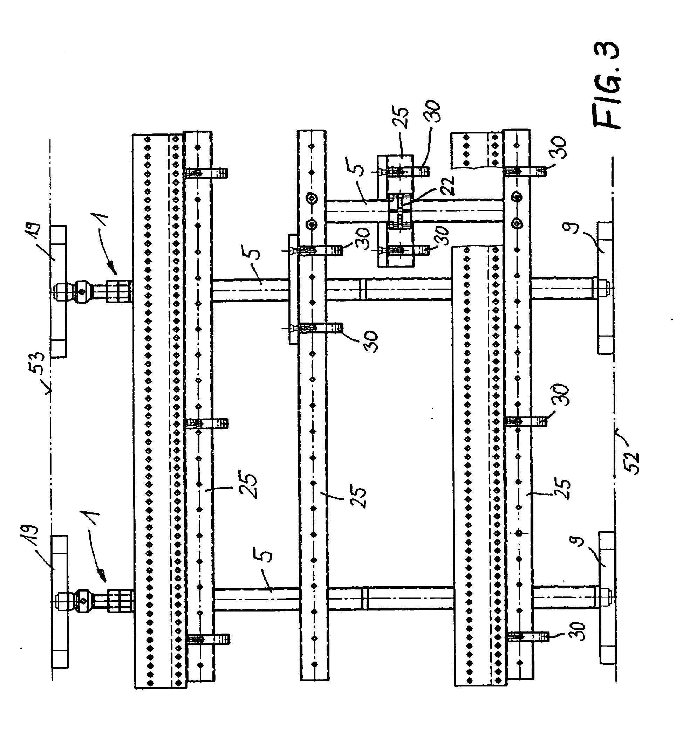

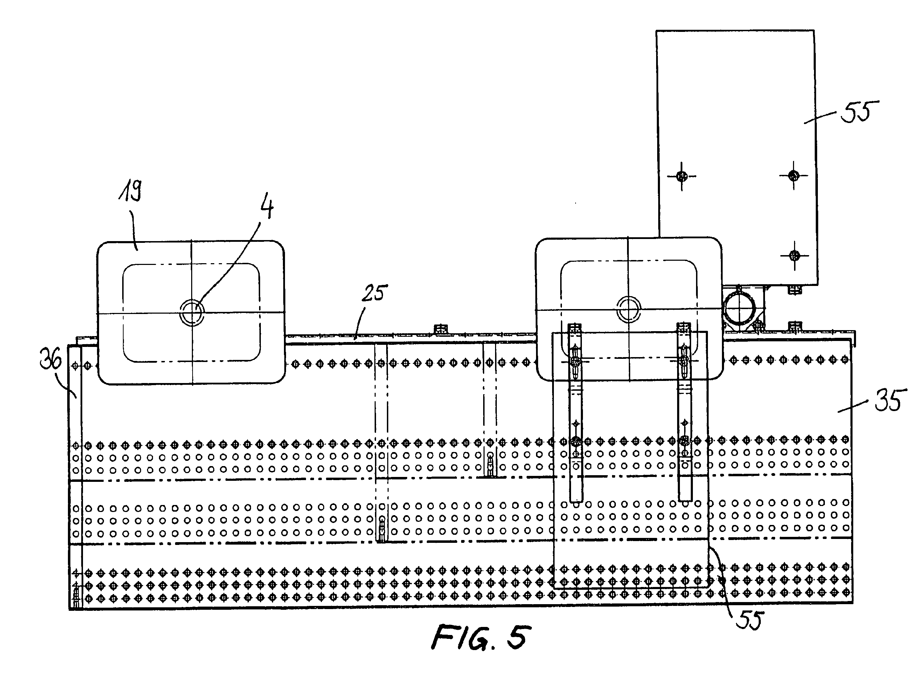

Aus Fig. 3, 4 und 5 ist ein Einspannvorrichtung-System zu entnehmen, das zwei Spannstempel 1 besitzt, die über ihre jeweiligen Stützglieder 9, 19 (Bodenadapter und Deckenadapter) zwischen Boden 52 und Decke 53 verspannt sind. An den Distanzstücken 5 der Stempel 1 sind jeweils drei Multifunktionsadapter 22 festgeklemmt, an denen jeweils eine Traverse 25 in vorbeschriebener Weise befestigt ist. An der oberen und unteren Traverse sind jeweils drei Dreieckträger 30 von unten aufgesteckt und festgeschraubt und auf diesen sind wiederum wannenförmige Regalböden 35 angebracht.

An der mittleren Traverse 25 sind im Bereich des rechten Spannstempels 1 zwei Dreieckträger 30 in kurzer Beabstandung voneinander befestigt, auf denen wiederum eine dickere Arbeitsplatte 55 angeschraubt ist.

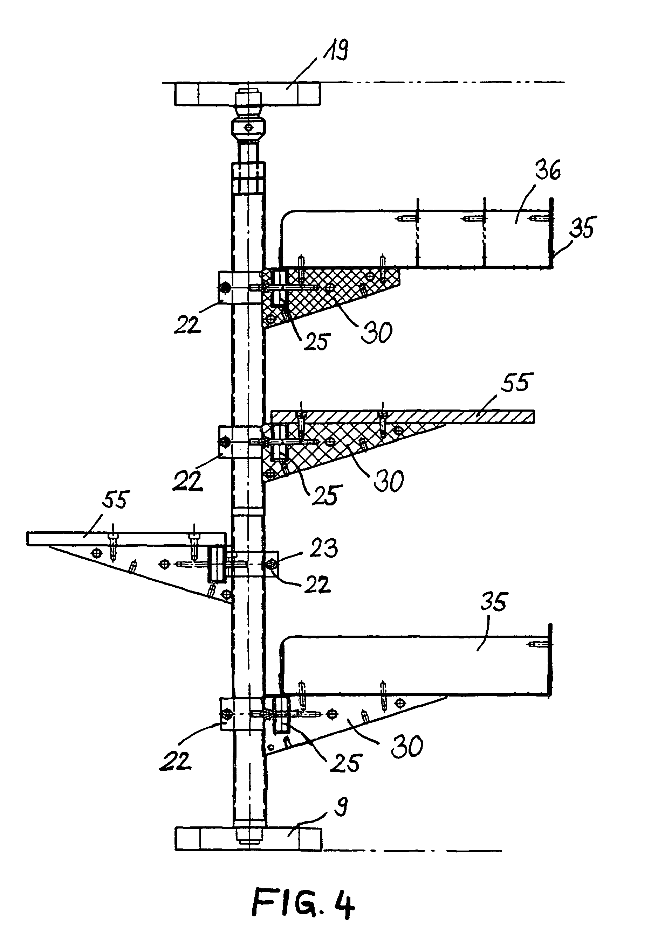

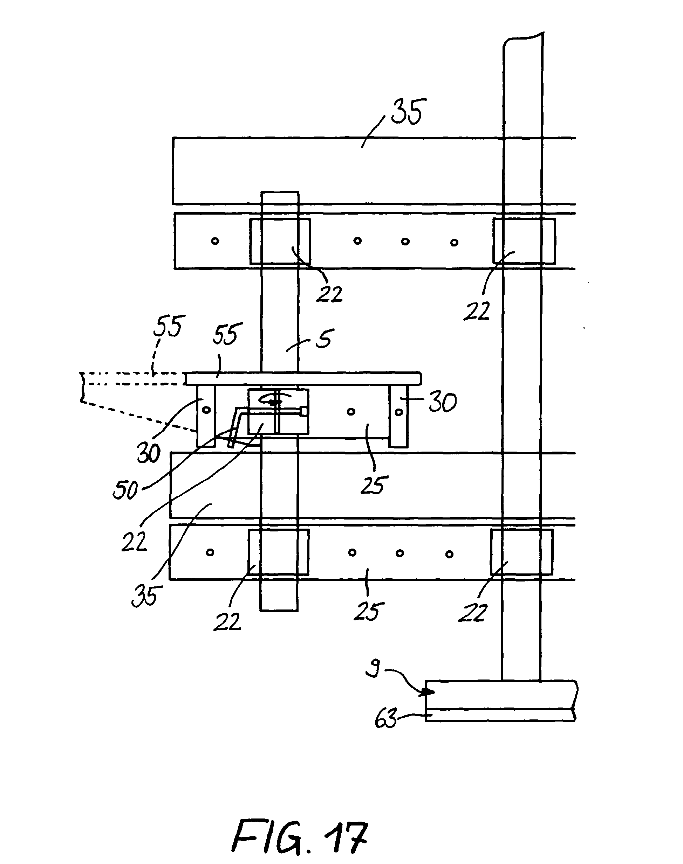

Wie auch im Zusammenhang mit Fig. 17 zuerkennen ist, ist an dem rechts weiter herausragenden Teil der mittleren und unteren Traverse je ein Multifunktionsadapter angeschraubt, in denen ein Distanzstück 5 vertikal festgeklemmt ist. An diesem Distanzstück ist wiederum ein Multifunktionsadapter 22 angebracht, der eine relativ kurze Traverse 25 trägt, auf der über zwei Dreieckträger 30 eine dicke Arbeitsplatte 55 befestigt ist. Wie insbesondere aus Fig. 4 zuerkennen ist, sind die an den langen Traversen befindlichen Regalböden oder Arbeitsplatten jeweils nach vorne herausragend angeordnet, während die mit dem Zwischen-Distanzstück 5 in Verbindung stehende Arbeitsplatte 55 nach hinten herausragt. Durch Lockern der Klemmschraube 23 kann diese Arbeitsplatte 55 um ihr Distanzstück 5 horizontal nach Bedarf verschwenkt oder vertikal verschoben werden.

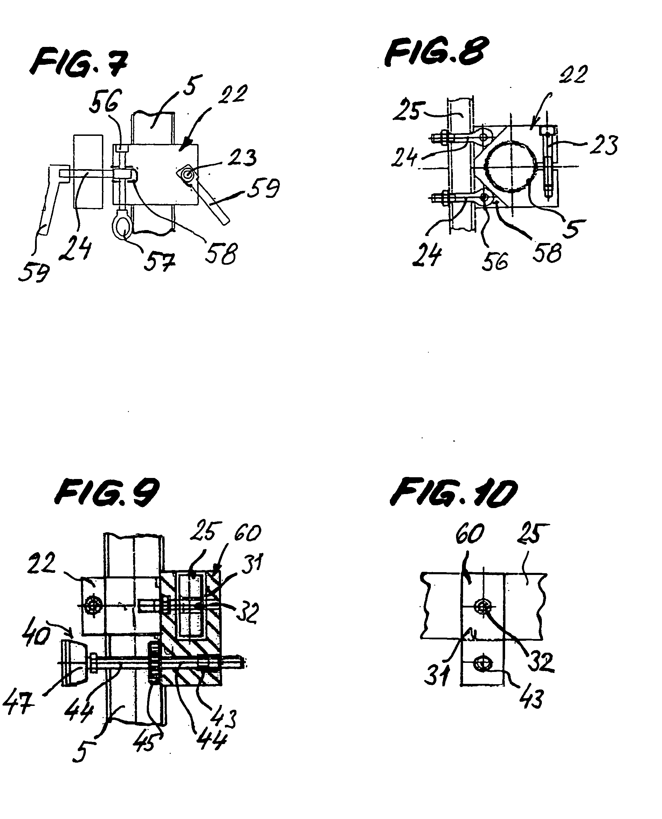

Zu Fig. 7 und 8 ist zusätzlich zu der Vorbeschreibung des Multifunktionsadapter 22 hinzuzufügen, dass dieser Augenschrauben 24 besitzt, mit denen der Adapter an der Traverse 25 angeschraubt ist, die über achsparallel geführte Halteschrauben 56 schwenkbar in Schlitzen 85 gehalten werden, wobei diese Schrauben 56 jeweils von Ringmuttern 57 gehalten werden, die ihrerseits zur Befestigung diverser Halte- und Spannelemente, wie Haken, Gurte usw. dienen können. Aus Fig. 7 ist des weiteren zu erkennen, dass die Klemmschraube 24 auch durchgehend ausgelegt sein kann und durch einen Schnellspanner 59 gespannt oder gelöst werden kann.

In Fig. 9 und 10 ist im Schnitt ein Traversenreiter 60 dargestellt, der über einen Steckschlitz 31 auf einer Traverse 25 von unten aufgesteckt und über eine Schraube 32 befestigt ist. Der Traversenreiter ist hier gleichzeitig als Torsionsadapter ausgebildet, dass heißt er spielt die Rolle des Adapterkörpers, in dem ebenfalls durch eine Gewindebohrung 43 die Gewindespindel 44, abgesichert durch die Kontermutter 45, hindurchgeführt ist und an seinem Kugelkopflager ein Druckstück 47 vorgesehen ist.

Zu Fig. 13 ist noch hinzuzufügen, dass hier ersichtlich ist, wie die Lochung 50 einer Lochblechwanne aussehen kann und dass an der Unterseite, wie in Fig. 14 dargestellt und auch aus Fig. 6 zu entnehmen ist, die Torsionsadapter 40 über die dreireihige Lochung in diversen Positionen befestigbar sind.

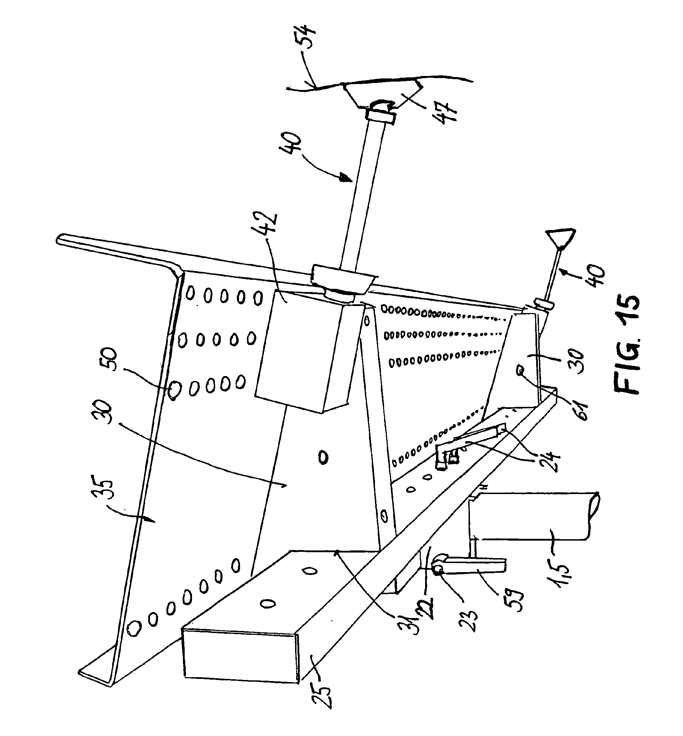

Aus Fig. 15 ist durch die perspektivische Ansicht von unten das Zusammenspiel der einzelnen Befestigungselemente gut erkennbar. So ist zu sehen, wie auf einem Distanzstück 5 des Stempels 1 ein Multifunktionsadapter über seine Klemmschraube 23 befestigt ist. An diesem ist wiederum über die beiden Schrauben 24 ein Adapter 25 angebracht, auf dem dann zwei Dreieckträger 30, diesmal über ihre Einsteckschlitze 31 von oben aufgesteckt befestigt sind, so dass deren obere Auflageseite eine schräge Ausrichtung haben und somit auch die auf diesen aufliegend befestigte Lochblechwanne 35 eine geneigte Stellung besitzt. An der Unterseite der Wanne 35 sind über deren Lochung 50 zwei Torsionsadapter 40 über deren Adapterkörper 42 gerade herausragend angebracht und die Druckstücke 47 stützen den Regalboden gegen Verschwenken an einem Wandelement 54 ab.

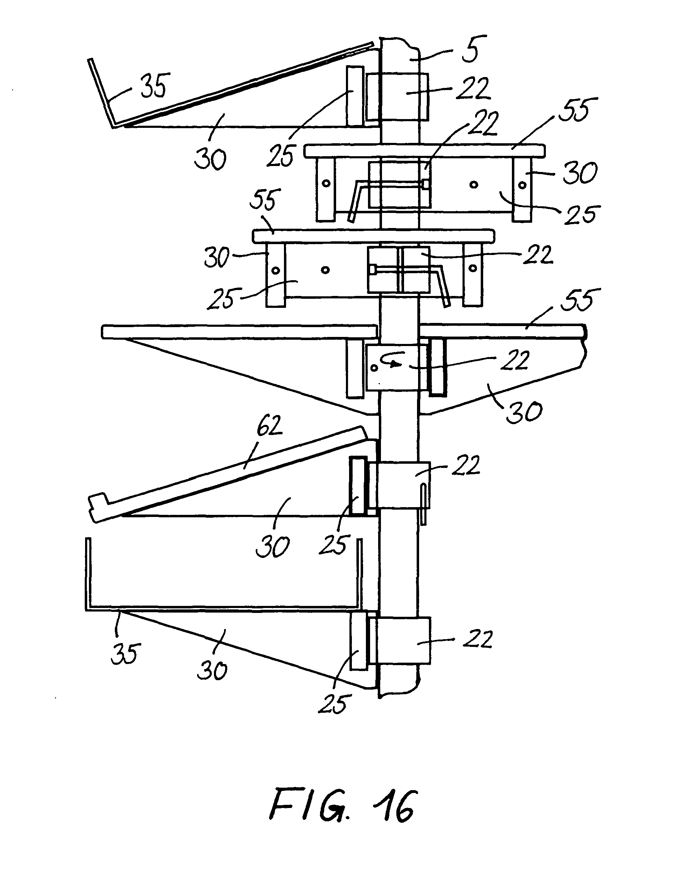

In Fig. 16 ist dargestellt, wie auf Distanzstücken 5 des Spannstempels 1 übereinander sechs Multifunktionsadapter befestigt sind, die zur Halterung unterschiedlicher Elemente in unterschiedlichen Positionen dienen. Der von oben beginnend erste Multifunktionsadapter 22 trägt eine Traverse 25, auf der von oben her ein Dreieckträger 30 aufgesteckt ist, so dass der darauf befestigte L-förmige Regalboden 35 eine nach unten geneigte Position einnimmt.

Der zweite Multifunktionsadapter trägt eine kurze Traverse 25, die exzentrisch nach rechts ausladend angebracht ist. Die auf der Traverse von unten angesetzten Dreieckträger 30 tragen eine horizontal ausgerichtete Arbeitsplatte 55. Der dritte Adapter 22 trägt die gleiche Ausstattung wie der zweite Adapter, nur das hier die Traverse 25 exzentrisch nach links ausladend angebracht ist. Dabei hat sowohl der zweite als auch der dritte Adapter jeweils einen Schnellspanner 59, wodurch sie schnell mit ihrem ganzen Aufbau schwenkbar und in Höhenpositionen stufenlos einstellbar ist.

Der vierte Adapter 22 trägt ebenfalls über eine Traverse 25 und Dreieckträger 30 eine horizontale Arbeitsplatte 55, die aus ihrer Rechtsausrichtung in eine Linksausrichtung verschwenkbar ist.

Der fünfte Multifunktionsadapter 22 trägt an der an ihm befestigten Traverse 25 von oben aufgesteckte Dreieckträger 30, auf deren schrägen Auflageseiten ein Pult 62 angebracht ist.

Der sechste und letzte Multifunktionsadapter 22 trägt über eine Traverse 25 und von unten aufgesetzte Dreieckträger 30 eine horizontal ausgerichtete Wanne 35.

Die Ausbildung bzw. Anordnung gemäß Fig. 17 wurde im wesentlichen bereits im Zusammenhang mit Fig. 3 beschrieben, so dass hier lediglich noch darauf hinzuweisen ist, dass durch die Verwendung eines Schnellspanners am mittigen Multifunktionsadapters 22, der die Arbeitsplatte 55 trägt, ein schnelles Entklemmen und dadurch Schwenken und Höheneinstellen der Arbeitsplatte möglich ist. Auch ist hier zu erkennen, dass an dem unteren Stützglied 9 des Spannstempels 1 eine relativ weiche rutschhemmende Auflageplatte 63 vorhanden ist, die selbstverständlich bei allen Stützgliedern vorhanden ist, jedoch dort weder dargestellt noch extra beschrieben wurde.

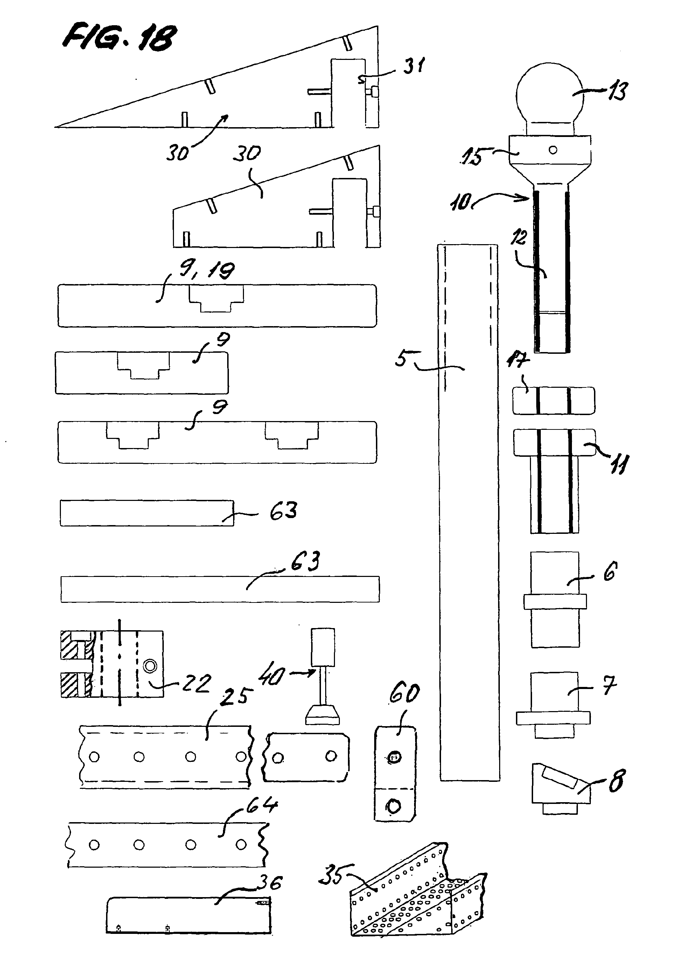

Schließlich sind in Fig. 18 einige der wichtigsten Systemelemente mit Spanneinrichtung lose dargestellt (von oben nach unten, zuerst links dann rechts), die im Zusammenhang mit den vorhergehenden Figuren bereits ausführlich beschrieben wurden. So ist zu erkennen; ein Dreieckträger, ein Dreieckträger mit gekürzter Spitze, ein großes Stützglied 9, 19, ein kleineres Stützglied 9, ein großes Stützglied 9 mit mehreren Stecklöchern, eine kleinere Auflageplatte 63, eine große Auflageplatte 63, ein Multifunktionsadapter 22, eine Traverse 25, eine Traversenverlängerung 27, ein Traversenreiter, eine Kleiderstange 64, eine Regaltrennwand 36, eine Regalboden-Lochblechwanne 35, eine Spanneinrichtung 10 (Kugelwinde), ein Distanzstück 5, eine Kontermutter 17, eine Gewindebuchse 11, ein Steck- Kupplungsteil 6, ein Steckteil 7, ein Schrägsteckteil 8.

## Patentansprüche

1. Einspannvorrichtung, insbesondere zur Sicherung von Ladegut in Laderäumen von Fahrzeugen und/oder als Organisationssystem in geschlossenen Räumen, mit mindestens einem Spannstempel (1), der eine beidseitig mit Stützgliedern (9, 19) versehene Sperrstange (4) aufweist und eine zu seinem Verspannen dienende Trieb- und Spanneinrichtung mit Gewindespindel enthält, wobei zur Lagerung des im montierten Zustand der Vorrichtung oberen Stützgliedes (19) ein Kugelkopflager (14) mit einem eine Lagerkugel (13) aufweisenden Lagerkopf vorgesehen ist und wobei als Trieb- und Spanneinrichtung am oberen Ende der Sperrstange (4) eine Gewindebuchse (11) eingesteckt ist, in die als Gewindespindel (12) ein Gewindezapfen (12) des die Lagerkugel (13) enthaltenden Lagerkopfes eingeschraubt ist, um insgesamt eine Kugelwinde zu bilden, **dadurch gekennzeichnet, dass** an der Sperrstange (4) ein Multifunktionsadapter (22) in Form eines Spannringes festgeklemmt ist, an dem mittels zwei Befestigungsschrauben (24) eine quer zur Sperrstange (4) verlaufende Traverse (25) in Form eines Vierkantrohres oder einer runden Haltestange (64) festgeschraubt ist, wobei die Traverse (25) in Längsrichtung mit gleichmäßig beabstandeten Bohrungen (26) versehen ist und der Abstand der Befestigungsschrauben (24) des Multifunktionsadapters (22) für die Traverse (25) gleich dem Lochabstand der Traverse (25) ist.

2. Vorrichtung nach Anspruch 1, **dadurch gekennzeichnet, dass** die Sperrstange (4) aus einem, oder aus mehreren über eine Doppelsteck-Kupplung (6) axial zusammengesteckten, Rohr- bzw. Distanzstücken (5) besteht und über ihr eines Ende auf oder in ein in mindestens eine Steckbohrung des unteren Stützgliedes (9) eingestecktes gerades oder schräges Steckteil (7, 8) auf- oder eingesteckt ist.

3. Vorrichtung nach Anspruch 1 oder 2, **dadurch gekennzeichnet, dass** die Befestigungsschrauben (24) als verschwenkbar aus dem Multifunktionsadapter (22) herausragende Ring- bzw. Augenschrauben ausgebildet sind.

4. Vorrichtung nach einem der Ansprüche 1 bis 3, **dadurch gekennzeichnet, dass** mindestens zwei Dreieckträger (30) auf die Traverse (25) aufgesteckt und daran festgeschraubt sind, zur Abstützung von Auflageelementen wie Platten, Lochblechwannen, Lochblechen, Werkbänken, Spannzwingen oder ähnliches.

5. Vorrichtung nach Anspruch 4, **dadurch gekennzeichnet, dass** die Dreieckträger (30) als rechtwinkelige Dreiecke mit spitzem Winkel von vorzugsweise ca. 30° ausgelegt sind, also mit einem Kathetenverhältnis 1:2, wobei zum Aufstecken auf die Traversen (25) ein parallel zur kurzen Kathete ausgerichteter und zur langen Kathete geöffneter Steckschlitz (31) mit Abmessungen gleich der Dicke und Höhe der Traverse (25) vorgesehen ist und zur Fixierung eine durch die Traversenbohrungen (26) hindurchführbare Schraube (23) vorgesehen ist.

6. Vorrichtung nach Anspruch 5, **dadurch gekennzeichnet, dass** die Dreieckträger (30) mit ihrem Steckschlitz (31) von oben auf die Traverse (25) gesteckt sind, wobei ihre Auflagefläche dann die Hypotenuse ist, die schräg abfallend verläuft oder dass die Dreieckträger (30) mit ihrem Steckschlitz (31) von unten auf die Traverse (25) aufgesteckt und verschraubt sind, wobei ihre Auflagefläche dann horizontal verläuft, und dass an den Auflageflächen der Dreieckträger (30) mindestens je eine, vorzugsweise zwei Gewindebohrungen (33) zum Fixieren von Auflageelementen wie Platten, Lochblechwannen, Lochblechen, Werkbänken, Spannzwingen oder ähnlichem vorgesehen sind.

7. Vorrichtung nach Anspruch 5 oder 6, **dadurch gekennzeichnet, dass** auf die Dreieckträger (30) aufgelegte und an diesen festgeschraubte Auflageelemente wie Blechwannen, Lochblechwannen, Lochplatten, Arbeitsplatten, Blechprofile oder ähnliches vorgesehen sind, auf bzw. in denen Waren, Warenkisten, Kästen oder ähnliches auf- oder einstellbar sind.

8. Vorrichtung nach einem der Ansprüche 1 bis 7, **dadurch gekennzeichnet, dass** eine Sperrstange (4) vorgesehen ist, an der mindestens eine Traverse (25) über einen Multifunktionsadapter (22) angebracht ist, wobei zur Verhinderung des Verschwenkens der Traverse (25) mit darauf befindlichem Aufbau, Ware oder Ladung, jeweils mindestens ein, vorzugsweise zwei Torsionsadapter (40) an den äußeren Enden einer der Traversen (25) oder eines über Dreieckträger (30) an einer Traverse (25) befestigten Auflageelementes, zum Beispiel einer Blechwanne, vorgesehen sind.

9. Vorrichtung nach Anspruch 8, **dadurch gekennzeichnet, dass** der Torsionsadapter (40) einen Adapterkörper (42) besitzt, der durch eine Gewindespindel (44) in Längsrichtung durchsetzt ist, an deren hervorragendem Ende ein Kugelkopflager mit beweglichem Druckstück (47) angebracht ist, und dass an dem Adapterkörper (42) drei Befestigungs-Gewindebohrungen (49) vorgesehen sind, die mit den Lochungen (50) eines von einer Regalboden-Lochwanne (35) gebildeten Auflageelementes so zusammenwirken, dass immer über mindestens zwei Schrauben die Befestigung erfolgt, unabhängig davon, ob die Adapteranordnung längs, quer oder in einem 45°-Winkel erfolgt.

10. Vorrichtung nach Anspruch 9, **dadurch gekennzeichnet, dass** in Längsrichtung des Adapterkörpers (42) zwei Schraublochreihen vorgesehen sind, mit einem Quer-Lochabstand gleich dem Lochabstand der Lochung (50) der Regalboden-Lochwanne (35), wobei in einer Lochreihe zwei Bohrungen (49) mit dem Lochabstand gleich dem Diagonalabstand zwischen zwei Lochreihen der Lochung (50) und in der anderen nur eine Bohrung (49) vorhanden ist, deren Längsabstand zur ersten Bohrung der ersten Reihe gleich dem zweifachen Lochabstand der Lochung (50) beträgt.

11. Vorrichtung nach einem der Ansprüche 1 bis 10, **dadurch gekennzeichnet, dass** ein Traversenreiter (60) vorgesehen ist, bestehend aus einem Körper mit einem einseitig offenen U-Steckschlitz (31) zum Übergreifen der Traverse (25) und einem Loch quer zur Traverse (25) zu deren Fixierung per Schrauben, und mit einer Querbohrung zur Aufnahme einer Gewindespindel (44) zur Bildung eines das Verschwenken der Traverse (25) verhindernden Torsionsadapters.

12. Vorrichtung nach einem der Ansprüche 1 bis 11, **dadurch gekennzeichnet, dass** eine Traversenverlängerung (27) in Form eines teleskopisch am Traversenende axial ein- und ausschiebbaren Profilstückes vorhanden ist, die mit einer Lochreihe versehen ist, die mit derjenigen der Traverse (25) korrespondiert.

13. Vorrichtung nach einem der Ansprüche 1 bis 12, **dadurch gekennzeichnet, dass** der Multifunktionsadapter (22) mit Schnellklemmschrauben (23, 59) versehen ist und eine nur kurze Traverse (25) mit zwei Dreieckträgern (30) hält, auf denen horizontal oder geneigt eine Arbeitsplatte (55), eine Pultplatte (62) oder Blechprofile (35) befestigbar sind, die durch Lockern der Schnellklemmschrauben (32, 59) bedarfsweise in Ruhe- und Arbeitsstellung ein- und ausschwenkbar und fixierbar sowie höheneinstellbar sind.

14. Vorrichtung nach einem der Ansprüche 1 bis 13, **dadurch gekennzeichnet, dass** an zwei übereinander an einer Sperrstange (4) angeordneten Traversen (25) vertikal übereinander je ein Multifunktionsadapter (22) festgeschraubt ist, in denen ein senkrecht hindurchgeführtes, kurzes Rohr-Distanzstück (5) festgeklemmt ist zur Benutzung als Befestigung für einen Schwenktisch oder Schwenkpult.

15. Vorrichtung nach einem der Ansprüche 4 bis 7, **dadurch gekennzeichnet, dass** auf die Dreieckträger (30) U- oder L-förmige Lochwannen oder Lochböden (35) aufgelegt und daran festgeschraubt sind, an deren Oberseite vertikal befestigte Trenn- oder Abschlusswände (36, 37) festgeschraubt sind.

16. Vorrichtung nach Anspruch 15, **dadurch gekennzeichnet, dass** auch an der Unterseite der Lochböden (35) Abschlusswände (38) befestigt sind, wobei diese unteren Abschlusswände (38) über Schrauben (39), die von oben durch die oberen Trenn- und Abschlusswände (36, 37) hindurch in die unteren Abschlusswände (38) eingeschraubt sind, an den Lochböden (35) befestigt sind.

17. Vorrichtung nach Anspruch 16, **dadurch gekennzeichnet, dass** an den unteren Abschlusswänden (38) Löcher (41) zum Befestigen von Haltemitteln wie Kordeln, Haken oder ähnliches zur Ladegutsicherung vorgesehen sind.

18. Vorrichtung nach einem der Ansprüche 1 bis 17, **dadurch gekennzeichnet, dass** Rohre, Traversen und/oder andere Teile mit sogenannten Schlauchpolsterungen versehen sind.

19. Verwendung einer Vorrichtung nach einem der Ansprüche 1 bis 18 in Lager-, Büro-, Wohn-, Krankenhaus- und Rehaklinik-Räumen als flexibles Regal- und Organisationssystem, als Raumteiler, zum Anbringen von Möbelteilen ohne Wandverschraubungen und/oder zum Anbringen verschiedener Hilfsmittel neben den Krankenbetten.

## Claims

1. Bracing device, in particular to secure loads in the loading spaces of vehicles and/or as an organisation system in closed spaces with at least one clamp post (1), which has a locking rod (4) equipped on either side with support elements (9, 19) and contains a driving and bracing unit with a screw spindle, serving to brace it, wherein for mounting the upper support element (19) in the assembled state of the device a ball head bearing (14) is provided with a bearing head having a bearing ball (13), and a threaded bush (11), into which a threaded spigot (12) of the bearing head containing the bearing ball (13) is screwed as screw spindle (12), said threaded bush (11) being inserted as a driving and bracing unit at the upper end of the locking rod (4), in order together to form a ball screw, **characterized in that** a multi-function adapter (22) in the form of a locking collar, on which a tie-bar (25), running transversely to the locking rod (4) in the form of a square tube or round retaining rod (64), is rigidly bolted by means of two fixing bolts (24), is firmly clamped on the locking rod (4), wherein said tie-bar (25) in the longitudinal direction is provided with evenly spaced bores (26) and the distance of the fixing bolts (24) of the multi-function adapter (22) for the tie-bar (25) corresponds to the hole spacing of the tie-bar (25).

2. Device according to Claim 1, **characterized in that** the locking rod (4) consists of one or more tubing or spacer pieces (5) axially joined together via a double-joining connection (6) and via its one end is pushed onto or into a straight or diagonal insertion piece (7, 8), inserted into at least one bore of the lower support element (9).

3. Device according to Claim 1 or 2, **characterized in that** the fixing bolts (24) are formed as ring or eye bolts protruding so that they can swing horizontally out of the multi-function adapter (22).

4. Device according to any one of Claims 1 to 3, **characterized in that** at least two triangular supports (30) are pushed onto the tie-bar (25) and firmly screwed thereon, in order to support bearing elements such as boards, perforated tin trays, perforated plates, workbenches, clamp clips or the like.

5. Device according to Claim 4, **characterized in that** the triangular supports (30) are designed as right-angled triangles with an acute angle of preferably approx. 30°, that is to say, with a cathetus ratio of 1:2, wherein for pushing onto the tie-bars (25) a slot (31), aligned parallel to the short side and open to the long side, has dimensions corresponding to the thickness and height of the tie-bar (25) and is provided for anchoring a bolt (33), which can be guided through the tie-bar bores (26).

6. Device according to Claim 5, **characterized in that** the triangular supports (30) with their insertion slot (31) are pushed from above onto the tie-bar (25), wherein their bearing surface is then the hypotenuse, which runs diagonally, or **in that** the triangular supports (30) with their insertion slot (31) are pushed and screwed from below onto the tie-bar (25), wherein their bearing surface then runs horizontally, and **in that** at least one, preferably two tapped holes (33) are provided for fixing bearing elements such as boards, perforated tin trays, perforated plates, workbenches, clamp clips or the like on the bearing surfaces of the triangular supports (30) in each case.

7. Device according to Claim 5 or 6, **characterized in that** bearing elements are provided such as tin trays, perforated tin trays, perforated plates, worktops, sheet metal profiles or the like laid over the triangular supports (30) and firmly screwed thereon, onto or into which bearing elements goods, crates, boxes or similar can be placed.

8. Device according to any one of Claims 1 to 7, **characterized in that** a locking rod (4) is provided, to which at least one tie-bar (25) is attached by means of a multi-function adapter (22), wherein at least one, preferably two torsion adapters (40) at the outside ends of one of the tie-bars (25) or a bearing element fastened on a tie-bar (25) by means of triangular supports (30), for example a tin tray, are provided in each case for preventing the tie-bar (25), with the structure, goods or load located thereon, from swinging horizontally.

9. Device according to Claim 8, **characterized in that** the torsion adapter (40) possesses an adapter body (42), which is bisected in the longitudinal direction by a screw spindle (44) at whose protruding end a ball element with a movable thrust piece (47) is attached, **in that** three mounting threaded bores (49), which cooperate with the perforations (50) of a bearing element formed from a shelf-base perforated tray (35) are provided on the adapter body (42), such that the attachment is always effected by means of at least two bolts, irrespective of whether the adapter arrangement is constructed lengthwise, crosswise or at an angle of 45°.

10. Device according to Claim 9, **characterized in that** two bolt hole rows, with a crosswise hole distance corresponding to the hole spacing of the perforation (50) of the shelf-base perforated tray (35), are provided in the longitudinal direction of the adapter body (42), wherein two bores (49) with the hole spacing corresponding to the diagonal distance between two rows of holes of the perforation (50), are present in one hole row and only one bore (49), whose longitudinal distance to the first bore of the first row corresponds to the double hole spacing of the perforation (50), is present in the other.

11. Device according to any one of Claims 1 to 10, **characterized in that** a tie-bar rider (60) is provided, consisting of a body with a U-shaped insertion slit (31) open on one side to straddle the tie-bar (25) and with a hole, diagonal to the tie-bar (25), for fixing it by bolts and with a diagonal bore for receiving a screw spindle (44) in order to form a torsion adapter preventing the tie-bar (25) from swinging horizontally.

12. Device according to any one of Claims 1 to 11, **characterized in that** a tie-bar extension (27), which is provided with a row of holes corresponding to that of the tie-bar (25), is present in the form of a profile piece, which can be axially pushed in and out telescopically at the tie-bar end.

13. Device according to any one of Claims 1 to 12, **characterized in that** the multi-function adapter (22) is provided with high-speed clamping bolts (23, 59) and holds an only short tie-bar (25) with two triangular supports (30), on which a worktop (55), desktop (62) or sheet metal profiles (35), which if necessary can be swung into and out of rest and work positions and can be fixed as well as adjusted in height by loosening the high-speed clamping bolts (32, 59), can be secured horizontally or diagonally.

14. Device according to any one of Claims 1 to 13, **characterized in that** in each case a multi-function adapter (22) is firmly bolted vertically one above the other on two tie-bars (25), arranged on a locking rod (4) one above the other, in which a short tube spacer piece (5), guided through perpendicularly, is firmly clamped so that it can be used to secure a swivel table or swivel desk.

15. Device according to any one of Claims 4 to 7, **characterized in that** U- or L-shaped perforated trays or perforated bases (35), to the upper side of which vertically fixed separation or end walls (36, 37) are firmly bolted, are laid over the triangular supports (30) and firmly screwed thereon.

16. Device according to Claim 15, **characterized in that** end walls (38) are also fastened on the lower face of the perforated bases (35), wherein these lower end walls (38) are fixed on the perforated bases (35) by means of bolts (39), which are screwed from above through the upper dividing or end walls (36, 37) into the lower end walls (38).

17. Device according to Claim 16, **characterized in that** holes (41) for fastening retaining means, such as cords, hooks or the like are provided on the lower end walls (38) for securing the load.

18. Device according to any one of Claims 1 to 17, **characterized in that** tubes, tie-bars and/or other parts are provided with so-called hose padding.

19. Use of a device according to any one of Claims 1 to 18 in warehouse, office, living, hospital or rehabilitation clinic areas as a flexible shelf and organisation system, as room partitions, for attaching furniture parts without threaded wall connections and/or for attaching various aids to the sides of patients' beds.

## Revendications

1. Dispositif de serrage, destiné en particulier à la fixation de charges dans des compartiments de chargement de véhicules et/ou à servir de système d'organisation dans des locaux fermés, avec au moins un vérin de serrage (1) comportant une barre de maintien (4) pourvue d'éléments d'appui (9, 19) sur ses deux côtés et contenant un dispositif de poussée et de tension avec un axe fileté servant à son extension, un palier à tête sphérique (14) étant prévu avec une lanterne comportant une sphère de palier (13) pour le logement de l'élément d'appui (19) supérieur, en état de montage du dispositif, et un manchon fileté (11) étant engagé sur l'extrémité supérieure de la barre de maintien (4) en tant que dispositif de poussée et de tension, dans lequel est vissée une goupille filetée (12) de la lanterne contenant la sphère de palier (13) en tant qu'axe fileté (12) pour former globalement un cric à bille, **caractérisé en ce qu'**un adaptateur polyvalent (22) ayant la forme d'une bague de serrage est bloqué sur la barre de maintien (4), sur lequel est fixement vissée au moyen de deux vis de fixation (24) une barre transversale (25) sous la forme d'un tube carré ou d'une barre d'appui cylindrique (64) s'étendant perpendiculairement à la barre de maintien (4), ladite barre transversale (25) étant pourvue d'alésages (26) régulièrement espacés dans la direction longitudinale, et l'espacement entre les vis de fixation (24) de l'adaptateur polyvalent (22) pour la barre transversale (25) étant égal à l'espacement entre les trous de la barre transversale (25).

2. Dispositif selon la revendication 1, **caractérisé en ce que** la barre de maintien (4) se compose d'une ou de plusieurs pièces tubulaires ou pièces d'espacement (5) axialement assemblées par un accouplement à double enfichage (6), et est par sa première extrémité emboîtée ou enfichée sur ou dans une pièce d'insertion (7, 8) droite ou inclinée engagée dans au moins un alésage de réception de l'élément d'appui inférieur (9).

3. Dispositif selon la revendication 1 ou 2, **caractérisé en ce que** les vis de fixation (24) sont réalisées comme vis à oeil ou pitons pivotantes et faisant saillie de l'adaptateur polyvalent (22).

4. Dispositif selon l'une des revendications 1 à 3, **caractérisé en ce qu'**au moins deux supports triangulaires (30) sont emboîtés sur la barre transversale (25) et fixement vissés sur celle-ci pour le maintien d'éléments de réception tels que plaques, bacs en tôle perforée, tôles perforées, établis, étaux ou similaires.

5. Dispositif selon la revendication 4, **caractérisé en ce que** les supports triangulaires (30) sont réalisés comme des triangles rectangles avec un angle aigu de 30 ° environ de préférence, soit avec un rapport de 1:2 entre les côtés de l'angle droit, une fente d'emboîtement (31) parallèle au côté court et ouverte sur le côté long de l'angle droit étant prévue pour l'emboîtement sur les barres transversales (25) avec des dimensions égales à l'épaisseur et à la hauteur de la barre transversale (25), et une vis (23) pouvant être passée dans les alésages (26) de barre transversale étant prévue pour la fixation.

6. Dispositif selon la revendication 5, **caractérisé en ce que** les supports triangulaires (30) sont emboîtés depuis le dessus par leur fente d'emboîtement (31) sur la barre transversale (25), leur surface de soutien étant alors l'hypoténuse qui s'étend en pente de façon oblique, ou **en ce que** les supports triangulaires (30) sont emboîtés depuis le bas par leur fente d'emboîtement (31) sur la barre transversale (25) et vissés, leur surface de soutien s'étendant alors horizontalement, et **en ce qu'**au moins un, de préférence deux alésages filetés (33) sont prévus sur les surfaces de soutien des supports triangulaires (30) pour la fixation d'éléments de réception tels que plaques, bacs en tôle perforée, tôles perforées, établis, étaux ou similaires.

7. Dispositif selon la revendication 5 ou 6, **caractérisé en ce que** sont prévus des éléments de réception positionnés sur les supports triangulaires (30) et fixement vissés sur ceux-ci, tels que bacs en tôle, bacs en tôle perforée, plaques perforées, plans de travail, profilés en tôle d'acier ou similaires, sur lesquels ou dans lesquels sont déposables ou stockables des marchandises, caisses de marchandises, des boîtes ou similaires.

8. Dispositif selon l'une des revendications 1 à 7, **caractérisé en ce qu'**une barre de maintien (4) est prévue, sur laquelle au moins une barre transversale (25) est rapportée au moyen d'un adaptateur polyvalent (22), au moins un, de préférence deux adaptateurs à torsion (40) étant prévus sur chaque extrémité extérieure d'une des barres transversales (25) ou d'un élément de réception, tel qu'un bac en tôle, fixé par des supports triangulaires (30) sur une barre transversale (25), pour empêcher le pivotement de la barre transversale (25) avec la structure, la marchandise ou le chargement supportés par elle.

9. Dispositif selon la revendication 8, **caractérisé en ce que** l'adaptateur à torsion (40) comprend un corps d'adaptateur (42) traversé par un axe fileté (44) dans la direction longitudinale, à l'extrémité saillante duquel est rapporté un palier à tête sphérique à coussin mobile (47), et **en ce que** trois alésages filetés de fixation (49) sont prévus sur le corps d'adaptateur (42), lesquels coopèrent avec les perforations (50) d'un élément de réception formé par un rayon d'étagère à bac perforé (35) de telle manière que la fixation est toujours réalisée par au moins deux vis, indépendamment d'une disposition longitudinale, transversale ou suivant un angle de 45 ° de l'adaptateur.

10. Dispositif selon la revendication 9, **caractérisé en ce que** deux rangées de trous pour vis sont prévues dans la direction longitudinale du corps d'adaptateur (42), avec un espacement transversal entre trous égal à l'espacement entre trous de la perforation (50) du rayon d'étagère à bac perforé (35), deux alésages (49) étant présents sur une rangée de trous, avec un espacement entre trous égal à l'espacement diagonal entre deux rangées de trous de la perforation (50), et un seul alésage (49) étant présent sur l'autre rangée, dont l'espacement longitudinal par rapport au premier alésage de la première rangée est égal au double de l'espacement entre trous de la perforation (50).

11. Dispositif selon l'une des revendications 1 à 10, **caractérisé en ce qu'**il est prévu un cavalier (60) de barre transversale, composé d'un corps avec une fente d'emboîtement (31) en U ouverte sur un côté pour envelopper la barre transversale (25), et d'un trou perpendiculaire à la barre transversale (25) pour la fixation par vissage de celle-ci, et avec un alésage transversal pour la réception d'un axe fileté (44) pour former un adaptateur à torsion empêchant le pivotement de la barre transversale (25).

12. Dispositif selon l'une des revendications 1 à 11, **caractérisé en ce qu'**une rallonge (27) de barre transversale est présente sous la forme d'une pièce profilée axialement extensible et rétractable de manière télescopique à l'extrémité de la barre transversale, laquelle est pourvue d'une rangée de trous correspondant à ceux de la barre transversale (25).

13. Dispositif selon l'une des revendications 1 à 12, **caractérisé en ce que** l'adaptateur polyvalent (22) est pourvu de vis à serrage rapide (23, 59) et ne maintient qu'une barre transversale (25) courte avec deux supports triangulaires (30), sur lesquels un plan de travail (55), un plan de pupitre (62) ou des profilés en tôle d'acier (35) peuvent être fixés, et peuvent si besoin être rabattus et pivotés en position de repos et de travail, fixés ainsi que réglés en hauteur par desserrage des vis à serrage rapide (23, 59).

14. Dispositif selon l'une des revendications 1 à 13, **caractérisé en ce que** deux adaptateurs polyvalents (22) sont verticalement superposés et fixement vissés chacun sur l'une de deux barres transversales (25) disposées en superposition sur une barre de maintien (4), dans lesquels est fixée une pièce d'espacement (5) courte, tubulaire, verticalement engagée pour servir de fixation pour une table pivotante ou un pupitre pivotant.

15. Dispositif selon l'une des revendications 4 à 7, **caractérisé en ce que** des bacs perforés ou rayons perforés (35) en forme de U ou de L sont mis en place sur les supports triangulaires (30) et vissés sur ceux-ci, sur la face supérieure desquels des parois de séparation ou terminales (36, 37) fixées verticalement sont fixement vissées.

16. Dispositif selon la revendication 15, **caractérisé en ce que** des parois terminales (38) sont également fixées sur la face inférieure des rayons perforés (35), lesdites parois terminales (38) inférieures étant fixées sur les rayons perforés (35) au moyen de vis (39) engagées par le haut dans les parois terminales (38) inférieures en traversant les parois de séparation ou terminales (36, 37) supérieures.

17. Dispositif selon la revendication 16, **caractérisé en ce que** des trous (41) pour la fixation de moyens de retenue tels que cordelettes, crochets ou similaires, sont prévus sur les parois terminales (38) inférieures afin de retenir des charges.

18. Dispositif selon l'une des revendications 1 à 17, **caractérisé en ce que** des tubes, des barres transversales et/ou d'autres pièces sont pourvus de rembourrages dits à gaine.

19. Utilisation d'un dispositif selon l'une des revendications 1 à 18 dans des locaux de stockage, de bureaux, d'habitation, d'établissements hospitaliers et de rééducation, en tant que système de rayonnages et d'organisation flexible, en tant que séparateur d'espaces pour la disposition d'éléments mobiliers sans vissages muraux et/ou pour la disposition de différents accessoires à côté des lits des patients.
